Europäisches Patentamt

European Patent Office

Office européen des brevets

(19)

(11) Veröffentlichungsnummer: **0 070 799**
**B1**

# (12) EUROPÄISCHE PATENTSCHRIFT

(45) Veröffentlichungstag der Patentschrift:
**11.09.85**

(21) Anmeldenummer: **82810289.7**

(22) Anmeldetag: **07.07.82**

(51) Int. Cl.⁴· **B 05 B 1/00**, **C 21 C 7/00**,
**F 27 B 15/00**, **B 01 J 8/18**

(54) **Gaseinspritzdüse für Wirbelreaktortank.**

(30) Priorität: **22.07.81 US 285759**

(43) Veröffentlichungstag der Anmeldung:
**26.01.83 Patentblatt 83/4**

(45) Bekanntmachung des Hinweises auf die Patenterteilung:
**11.09.85 Patentblatt 85/37**

(84) Benannte Vertragsstaaten:
**AT BE CH DE FR GB IT LI NL SE**

(56) Entgegenhaltungen:
**US - A - 3 654 140**
**US - A - 4 177 066**

(73) Patentinhaber: **SCHWEIZERISCHE ALUMINIUM AG,**
**CH-3965 Chippis (CH)**

(72) Erfinder: **Clumpner, Joseph A., 838 Mason Wood Drive,**
**St. Louis Missouri 63141 (US)**

**Beschreibung**

Die vorliegende Erfindung bezieht sich auf eine verbesserte Gaseinspritzdüse für die Verwendung in einem Wirbelreaktortank wie es zum Entgasen von Metallschmelzen mittels eines Zuschlaggases Verwendung findet.

Eine Methode und eine Vorrichtung zur Entgasung von geschmolzenem Metall ist in der US-A-4 177 066 beschrieben.

Das genannte US-Patent beschreibt die Entgasung von geschmolzenem Metall mit Hilfe einer Vorrichtung bestehend aus einem Wirbelreaktortank in welchem das geschmolzene Metall tangential eingebracht wird, so daß das geschmolzene Metall den Tank in Art einer Wirbelrotation zwischen der Eingabe- und der Abflußöffnung durchfließt. Um die gewünschte Wirbelströmung des geschmolzenen Metalls im Reaktor und zwar zwischen Metalleingabe und Metallabfluß zu erzielen, ist es erforderlich, daß der Metallzufluß so in bezug auf die Kammerwand des Reaktors angeordnet ist, daß die Flüssigkeit tangential in den Reaktor eingegeben wird.

In einer bevorzugten Ausführungsform umfaßt der Wirbelreaktortank einen im wesentlichen zylindrischen langgestreckten Seitenwandteil und einen dann nach unten zusammenlaufenden Seitenwandteil unterhalb des ersteren, im wesentlichen zylindrischen Wandteiles.

Die Zuführungsdüsen für das Zuschlaggas münden in den sich verjüngenden Wandteil in verschiedenen Höhen, um die Verteilung der Blasen des Zuschlaggases über die gesamte Schmelze, wie sie vom Zulauf zum Ablauf durchfließt, zu optimieren.

Durch die Anordnung der Düsen in verschiedenen Höhen in dem sich verjüngenden Wandteil sind die Düsen für das Zuschlaggas folglich in verschiedenen Abständen von der Zentralachse des Wirbelreaktortanks angebracht und maximalisieren dadurch ebenfalls die Verteilung der Gasblasen des Zuschlaggases.

Obwohl der oben erwähnte, im US-A-4 177 066 offenbarte Wirbelreaktortank den anderen Entgasungseinrichtungen des damaligen Standes der Technik überlegen war, ist man doch auf eine Anzahl von Problemen im Bezug auf die Konstruktion der Düsen für das Zuschlaggas gestoßen. Insbesonders wurde ein Auslaufen von Metall rund um die Düsenspitze festgestellt. Als weiteres Problem wurde ein Lecken in der eigentlichen Zufuhrleitung für das Zuschlaggas festgestellt. Und letztlich wurde gefunden, daß die Düsen, wenn sie über die Kammerwand vorstehen und in den eigentlichen Tank hineinragen, zum Abbrechen neigen.

Dementsprechend war die Aufgabe der vorliegenden Erfindung, eine verbesserte Konstruktion einer Gaseinspritzdüse für einen Wirbelreaktortank, wie er in der Entgasung von Metallschmelzen mittels Zuschlaggas Verwendung findet, zu schaffen.

Das Ziel der vorliegenden Erfindung war es, eine verbesserte Konstruktion einer Gaseinspritzdüse für einen Wirbelreaktortank, wie er zur Entgasung von Metallschmelzen verwendet wird, zu schaffen, bei welcher ein Lecken des Reaktortanks rund um die Düse verhindert wird und welche in der Gaszufuhrleitung nicht leckanfällig ist.

Es war ein weiteres Ziel der vorliegenden Erfindung, eine verbesserte Konstruktion einer Gaseinspritzdüse mit den vorgenannten Verbesserungen zu schaffen, die einfach und billig anzuwenden ist.

Erfindungsgemäß wurde das mit einer Gaseinspritzdüse nach Anspruch 1 erreicht.

Die vorliegende Erfindung umfaßt eine verbesserte Konstruktion einer Gaseinspritzdüse für einen Wirbelreaktortank wie er zur Entgasung von geschmolzenem Metall mittels eines Zuschlaggases Verwendung findet.

Die Konstruktion der Zuschlaggasdüse umfaßt ein mit der Außenwand des Wirbelreaktortanks fest verbundenes und mit der Innenwand bündig abschließendes Düseneinsatzstück.

Der Düseneinsatz ist mit einer Auflagefläche versehen, welche so ausgestattet ist, daß sie den Konus einer Düsenspitze aus keramischem oder ähnlichem Material aufnehmen kann.

Die Düse für das Zuschlaggas ist mit dem Konus der Düsenspitze federverspannt und zwar mit einer ausreichenden Kraft, um die Düse gegen den Spitzenkonus und diesen wiederum gegen das Düseneinsatzstück abzudichten, um auf diese Weise ein Austreten von Metall aus dem Reaktor rund um die Zuschlaggasdüse zu verhindern.

Die Düse für das Zuschlaggas ist an deren Gaszuleitung mittels eines Düsengewindeteils befestigt und mit einer Dichtung zwischen Düsengewindeteil und Gasdüse versehen, um Gasdichtigkeit dieses Bauteils zu gewährleisten.

Durch weitgehend bündige Montage der Düse für das Zuschlaggas mit der Innenwand des Wirbelreaktortanks wird eine Beschädigung der Düse durch Metallaufprall oder durch mechanische Beschädigung durch Reinigungsgeräte vermieden.

Entsprechend einer bevorzugten Ausführungsform der vorliegenden Erfindung ist der Bauteil für die Gasdüsen in einer mit der peripheren Wand des Wirbelreaktors starr verbundenen Befestigungskonstruktion so montiert, daß er ausgewechselt werden kann.

Die Montage wird so ausgeführt, daß der Düsenbauteil im Falle einer Verstopfung der Düse oder des Verschlusses des Düsenspitzenkonus oder ähnlichem leicht und ohne weiteres ausgebaut und ersetzt werden kann.

Die erfindungsgemäße Vorrichtung eliminiert Metallaustritt aus dem Reaktor rund um die Düsenspitze, verhindert Gasverlust entlang der Zuleitung für das Zuschlaggas und ermöglicht ohne weiteres den Austausch der Düse im Falle von Verstopfung oder ähnlichem.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1 eine schematische Ansicht einer bevorzugten Ausführungsform eines Wirbelreaktortanks wie er im US-A-4 177 066 offenbart ist und zwar unter Mitverwendung der verbesserten Konstruktion der Gaseinspritzdüse der vorliegenden Erfindung;

Fig. 2 eine schematische Schnittansicht der Konstruktion der Gasinjektionsdüse der vorliegenden Erfindung entlang der Linie 2-2 der Zeichnung in Bild 3;

Fig. 3 die Vorderansicht der Befestigungseinrichtung für die Gaseinspritzdüse wie sie im zentralen Teil des Wirbelreaktortanks angebracht ist;

Fig. 4 eine auseinandergezogene, perspektivische Ansicht der Konstruktionsteile der Gaseinspritzdüse wie sie der vorliegenden Erfindung entsprechen.

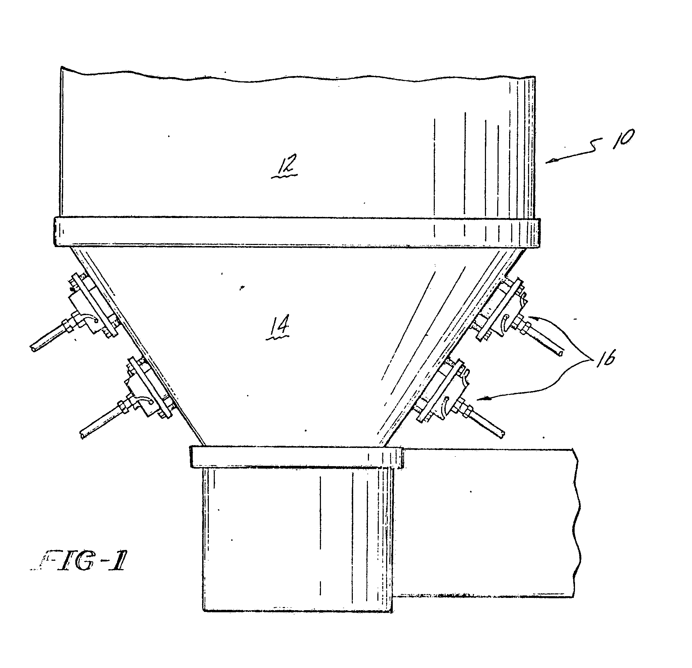

In Fig. 1 ist die Lage der in eine bevorzugte Ausführung eines Wirbelreaktortanks (10) eingebauten Gaseinspritzdüse dargestellt.

Er besteht im Hauptteil aus dem zylindrischen Seitenwandteil (12) gefolgt von einem unterhalb des zylindrischen Seitenwandteils (12) nach unten zusammenlaufenden Seitenwandteil (14). Wie schon früher festgehalten, kann die Konstruktion der Zuschlaggasdüse der vorliegenden Erfindung in jeglichen Wirbelreaktortank, wie im US-A-4 177 066 offenbart, einbezogen werden.

Eine Vielzahl von Gaseinspritzdüsen werden in dem nach unten zusammenlaufenden Seitenwandteil (14) mit Hilfe von Halterungsrahmen (16) befestigt.

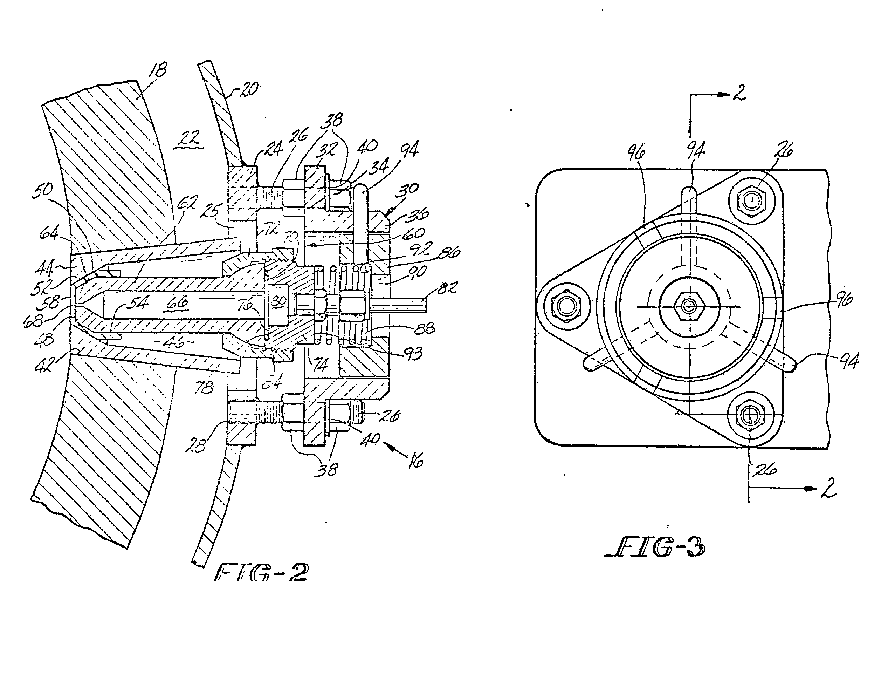

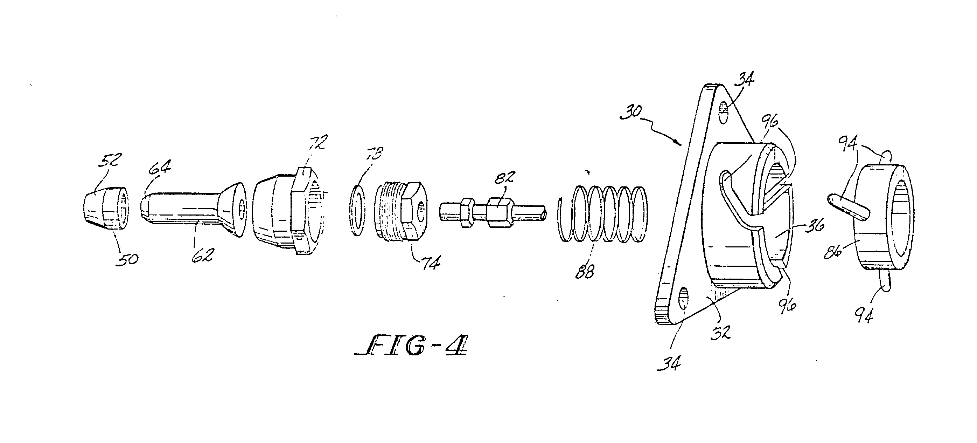

Unter besonderer Bezugnahme auf die Fig. 2 bis 4, werden die Konstruktionseinzelheiten der Gaseinspritzdüse und der Halterungsrahmen im Detail beschrieben werden. Unter Bezugnahme auf Fig. 2 ist zu erwähnen, daß der sich nach unten verjüngende Seitenwandteil (14) des Wirbelreaktortanks aus einer Innenwand (18), aus geeignetem feuerfesten Material und aus einer Außenwand (20), vorzugsweise hergestellt aus Stahl, besteht, wobei die Innen- und Außenwand einen Zwischenraum ausbilden.

Der Zwischenraum (22) zwischen Innen- (18) und Außenwand (20) ist vorzugsweise mit geeignetem Isoliermaterial ausgefüllt.

Die Außenwand (20) ist mit mehreren Flanschen (24) versehen, deren Anzahl der im Wirbelreaktortank verwendeten Anzahl Düsen entspricht. Die Flanschen (24) sind mit einem Loch (25) zur Montage der Düsenteile versehen und können mit der Wand (20) aus einem Teil bestehen oder sie werden getrennt hergestellt und in geeignete Aussparungen der Wand (20) durch Schweißen etc. befestigt.

Die Flanschen (24) sind alle mit mehreren Gewindezapfen (26) versehen, die in den Löchern (28) der Flanschen (24) verschweißt sind.

Wie oben erwähnt, sind am Wirbelreaktortank mehrere Düsen für das Zuschlaggas vorgesehen.

Jede der besagten Düsen ist mit Hilfe eines äußeren Ringteils (30) befestigt. Dieser besteht aus einem Flanschteil (32) und einem zylindrischen Teil (36), wobei der Flanschteil (32) seinerseits mit einer Anzahl von Löchern (34) zur Befestigung an den Schraubenbolzen (26) versehen ist.

Der äußere Ringteil (30) ist auf dem Gewindezapfen (28) den jeweiligem Flansch (24) so zugeordnet, daß mit Hilfe von Muttern (38) und Federringen (40) die auf die Düse diagonal wirkenden Drucke kontrolliert werden können, wie dies weiter unten im Detail beschrieben werden wird.

Die Innenwand (18) ist mit einer Mehrzahl von Bohröffnungen (42), die in ihrer Zahl mit der Anzahl der Löcher (25) im Flansch (24) übereinstimmen, versehen.

In jede der Bohröffnungen (42) ist ein Düseneinsatz (44) mit durchgehendem Loch (46) und einer konischen Auflagefläche (48) montiert.

Die Düseneinsätze aus geeignetem feuerfesten Material wie Siliziumcarbid oder ähnlichem sind in den Bohröffnungen (42) der inneren Wand (18) befestigt.

In das durchgehende Loch (46) des Düseneinsatzes (44) ist ein Düsenspitzenkonus (50) mit abgekanteter Oberfläche (52) montiert und so angepaßt, daß er mit der Auflagefläche zusammen dichtet.

Der Düsenspitzenkonus (50) ist vorzugsweise aus FIBERFRAX-Material hergestellt (FIBERFRAX ist die Markenbezeichnung der Harbison-Carborundum Corp. für keramische Fasern aus Ton- und Kieselerde), welches unter Druckeinwirkung die abgekantete Oberfläche (52) des Düsenspitzenkonus (50) an der Dichtungsoberfläche (48) des Düseneinsatzes (44) abdichtet.

So wie der Düseneinsatz (44) ist auch der der Düsenspitzenkonus (50) mit einer durchgehenden Öffnung (54) versehen, welche auch eine dichtende Oberfläche (58) aufweist welche die abgeschrägte Oberfläche (64) des Düsenformstücks (62) der Gesamtdüse (60) aufnimmt und auf diese Weise dichtet.

Die Gesamtdüse (60) besteht aus einem Düsenformstück (62) mit einem Durchflußkanal (66) und eine Mündungsöffnung (68) an dessen Ende. Montiert an der hinteren Fläche (70) des Düsenformstückes (62) ist mittels einer Düsenmutter (72) ein Schraubenbauteil (74) mit einem unterschnittenen Teil (76), welcher eine Dichtung (78) aufnimmt die so ausgelegt ist, daß sie sich an die hintere Oberfläche (70) des Düsenformstückes (62) gasdicht anpaßt.

Der Schraubenbauteil (74) ist mit einer durchgehenden Verbindung (80) versehen, welche eine Gasversorgungsleitung (82) aufnimmt die mit dem Schraubenbauteil (74) durch eine Schweißverbindung oder ähnlich befestigt ist.

Der Schraubenbauteil (74) ist außen mit einem Gewinde (84) versehen, um die Düsenmutter (72) für die Sicherung des Schraubenbauteils (74), die sich in Abdichtposition zur hinteren Oberfläche (70) des Düsenformstücks (62) über einer Dichtung (78) befindet, aufzunehmen. Die Dichtung (78) kann eine Metalldichtung sein, besteht aber vorzugsweise aus einer Art imprägnierter Graphitpackung.

Die gesamte Düse ist an die durchgehende Öffnung (54) des Düsenspitzenkonus (50) eingesetzt und zwar so, daß die abgeschrägte Oberfläche (64) des Düsenformstückes (62) mit der abdichtenden Oberfläche (58) des Düsenspitzenkonus (50) mit Hilfe eines Innenringes (86) und einer Düsendruckfeder (88) dichtend abschließt.

Der innere Ring (86) ist mit einer durchgehenden Öffnung (90), die einen unterschnittenen Teil (92) aufweist, versehen um eine Seite der Düsendruckfeder (88) aufzunehmen, deren andere Seite so angeordnet ist, daß sie an der hinteren Wand (93) des Schraubenbauteils (74) anliegt.

Der innere Ring (86) ist mit einer Anzahl an ihm befestigten Auslegern (Seitenarme) (94) ausgestattet, die so gestaltet sind, daß sie in Nuten (96), die sich um aufrechten Teil (36) des äußeren Ringteiles (30) befinden, geschützt aufgenommen werden.

Wenn die Ausleger (94) des inneren Ringes (86) in den Nuten (96) des äußeren Ringteils (30) aufgenommen sind, drückt die Düsendruckfeder (88), welche an der unterschnittenen Oberfläche (92) des Loches (90) im inneren Ring (86) anliegt, gegen die Rückwand (93) des Schraubenbauteils (74) und zwar so, daß die Düse insbesondere die abgeschrägte Oberfläche (64) des Düsenformstückes (62) abdichtend mit der abdichtenden Oberfläche des Düsenspitzenkonus (50) aufeinander ausgerichtet wird.

Die von der Feder (88) auf die Gesamtdüse (60) ausgeübte Druckkraft kann durch Lageänderung des äußeren Ringteils (30) gegen die Flansche (24) angepaßt werden und zwar dadurch, daß man den äußeren Ringteil (30) auf dem Gewindezapfen (66) mit Hilfe von Muttern (38) und Federringen (40) in verschiedene Stellungen bringt.

Durch die Schaffung einer wie oben geschilderten zusammengebauten Düse und eines Halterungsrahmens wird ein Auslaufen von geschmolzenem Metall rund um den Düsenformstück (62) vermieden.

Weiters wird durch die Vorrichtung im Schraubenbauteil (74) der Düse, der Düsenmutter (72), der Dichtung (78) und des Düsenformstückes (62) ein Gasaustritt aus der Zuschlaggasleitung vermieden. Letztlich wird, nachdem Düsenteile nicht in das Innere des Wirbelreaktortanks hineinragen, eine Beschädigung des Düsenteils durch Aufprall von geschmolzenem Metall oder bei der Reinigung der Innenwand des Reaktors ausgeschaltet.

Wie früher erwähnt, kann das Öffnungsprofil (68) des Düsenteils (62) aus einer geraden Öffnung mit konstantem Durchmesser oder aus einem konvergierenden — divergierenden Querschnitt bestehen.

Gemäß vorliegender Erfindung soll der Durchmesser des geraden Öffnungsteils so eng als möglich, aber so gestaltet sein, daß ein Verstopfen des Öffnungsquerschnittes mit geschmolzenem Metall verhindert wird.

Laut vorliegender Erfindung kann die Öffnung im Bereich von 0,127 mm bis 1,905 mm vorzugsweise bei 0,254 mm bis 1,27 mm liegen.

Im Falle eines konvergierenden — divergierenden Querschnittes wird bevorzugt, daß der konvergierende Teil mit der Düsenachse ein Winkel von ca. 10° bis 60°, vorzugsweise von 20° bis 40° einschließt. Der divergierende Teil sollte hingegen mit der Düsenachse einen Winkel von ca. 1° bis 8°, vorzugsweise 2° bis 4° bilden.

Der Übergang vom konvergierenden zum divergierenden Teil soll eine glatte Oberfläche aufweisen und frei von abrupter Strömungsänderung (Ablenkung) sein.

Es wurde festgestellt, daß bei Verwendung der Gaseinspritzdüse der vorliegenden Erfindung, Metall- und Gasaustritt vermieden und die Lebensdauer der Düsen beträchtlich verlängert werden kann.

Weiters sind die Düsen so montiert, daß sie sich ohne weiteres adjustieren lassen und wenn nötig ausgetauscht werden können. Es versteht sich, daß die Erfindung nicht auf die hierin beschriebenen und gezeigten Beispiele beschränkt ist, sie ist vielmehr als Illustration für die bestmögliche Ausführungsart der Erfindung anzusehen, welche für Modifikationen von Form, Größe, Anordnung und Operationsablauf offen ist.

**Patentansprüche**

1. Gaseinspritzdüse (60) für einen Wirbelreaktortank (10) zum Entgasen von Metallschmelzen mittels eines Zuschlaggases, wobei der Wirbelreaktortank aus einem gestreckten zylindrischen Seitenwandteil (12) gefolgt von einem unterhalb des zylindrischen Seitenwandteile weiteren, nach unten zusammenlaufenden Seitenwandteil (14), mit gemeinsamer zentraler Achse, einer Metalleingabeöffnung für die Zufuhr von geschmolzenem Metall, einer unterhalb der Zufuhr liegenden Metallabflußöffnung zur Entfernung des behandelten schmelzflüssigen Metalls und wenigstens zwei Gaszufuhrvorrichtungen die in verschiedenen Höhen des nach unten zusammenlaufenden Seitenwandteils angeordnet sind und sich die Metalleingabeöffnung über, und die Metallabflußöffnung unter, den Gaszufuhrvorrichtungen befindet, gebildet wird, und die Gaszufuhrvorrichtung als Bohröffnungen (42) mit darin eingesetzten Gaseinspritzdüsen ausgebildet ist, dadurch gekennzeichnet, daß der Wirbelreaktortank aus einer Innenwand (18) und einer Außenwand (20) besteht, wobei die Innen- und Außenwand einen Zwischenraum (22) ausbilden und die Gaseinspritzdüse an der Außenwand (20) befestigt und mit der Innenwand (18) des Seitenwandteils (14) bündig ist und die Gaseinspritzdüsen (60) die Bohröffnung (42) abdichtend abschließen.

2. Gaseinspritzdüse nach Anspruch 1, dadurch gekennzeichnet, daß in jede Bohröffnung (42) ein Düseneinsatz (44) mit durchgehendem Loch (46) und einer konischen Auflagefläche (48) mon-

tiert ist und daß in das durchgehende Loch (46) des Düseneinsatzes eine Gesamtdüse (60) mit einem Düsenspitzenkonus (50) mit abgekanteter Oberfläche (52) montiert und angepaßt ist und daß der Düsenspitzenkonus (50) mit der konischen Auflagefläche (48) des Düseneinsatzes (44) dichtet.

3. Gaseinspritzdüse nach Anspruch 1 und 2, dadurch gekennzeichnet, daß der Düsenspitzenkonus (50) aus keramischen Fasern aus Ton- und Kieselerde hergestellt ist.

4. Gaseinspritzdüse nach Anspruch 1 bis 3, dadurch gekennzeichnet, daß sie eine Gesamtdüse enthält, bestehend aus einem Düsenformstück (62) mit einem Durchflußkanal (66) und einer Mündungsöffnung (68) an dessen Ende und einer an der hinteren Fläche des Düsenformstückes (62) montierten Düsenmutter (72), einem Schraubenbauteil (74) mit einem unterschnittenen Teil (76) der eine Dichtung (78) aufnimmt, die so ausgelegt ist, daß sie sich an die hintere Oberfläche (70) des Düsenformstückes (62) gasdicht anpaßt und der Schraubenbauteil (74) mit einer durchgehenden Verbindung (80) versehen ist, die eine Gasversorgungsleitung (82) aufnimmt, die mit dem Schraubenbauteil (74) durch eine Schweißverbindung befestigt ist.

5. Gaseinspritzdüse nach Anspruch 1 bis 4, dadurch gekennzeichnet, daß die gesamte Düse in die durchgehende Öffnung (54) des Düsenspitzenkonus (50) eingesetzt ist und daß die abgeschrägte Oberfläche (58) des Düsenspitzenkonus (50) mit Hilfe eines Innenringes (86) und einer Düsendruckfeder (88) dichtend abschließt.

6. Gaseinspritzdüse nach Anspruch 1 bis 5, dadurch gekennzeichnet, daß ein innerer Ring (86) mit einer durchgehenden Öffnung (90), die einen unterschnittenen Teil (92) aufweist, versehen ist, um eine Seite der Düsendruckfeder (88) aufzunehmen, deren andere Seite so angeordnet ist, daß sie an der hinteren Wand (93) des Schraubenbauteils (74) anliegt und der innere Ring (86) mit einer Anzahl an ihm befestigten Ausleger (94) ausgestattet ist, die so gestaltet sind, daß sie in Nuten (96), die sich in einem zylindrischen Teil (36) des äußeren Ringteils (30) befinden, geschützt aufgenommen werden.

7. Gaseinspritzdüse nach Anspruch 1 bis 6, dadurch gekennzeichnet, daß die Ausleger (94) des inneren Ringes (86) in den Nuten (96) des äußeren Ringteils (30) aufgenommen sind und die Düsenfeder (88), welche an der unterschnittenen Oberfläche (92) des Loches (90) im inneren Ring (86) anliegt, gegen die Rückwand (93) des Schraubenbauteils (74) drückt, so daß die Düse, insbesondere die abgeschrägte Oberfläche (64) des Düsenformstückes (62) abdichtend mit der abdichtenden Oberfläche des Düsenspitzenkonus (50) aufeinander ausgerichtet ist.

8. Gaseinspritzdüse nach Anspruch 1 bis 7, dadurch gekennzeichnet, daß die von der Feder (88) auf die Gesamtdüse (60) ausgeübte Druckkraft durch Lageänderung des äußeren Ringteils (30) gegen die Flansche (24) angepaßt wird, indem der äußere Ringteil (30) auf dem Gewindezapfen (26) mit Hilfe von Muttern (38) und Federringen (40) in verschiedene Stellungen gebracht wird.

9. Verwendung der Gaseinspritzdüse nach Patentanspruch 1 in Wirbelreaktortanks für die Entgasung von Metallschmelzen mittels eines Zuschlaggases.

## Claims

1. Gas injection nozzle (60) für a swirling reactor tank (10) for the degassing of metal melts by means of a fluxing gas, where the swirling reactor tank is formed of an elongated cylindrical side wall part (12) followed by a further, downwardly convergent side wall part (14) below the cylindrical side wall part, with common central axis, a metal chraging opening for the feed of molten metal, a metal outflow opening lying below the feed for the removal of the treated molten metal and at least two gas feed devices which are arranged at different heights of the downwardly convergent side wall part, the metal charging opening being situated above and the metal outflow opening below the gas feed devices and the gas feed devices being formed as drilled openings (42) with gas injection nozzles inserted into them, characterised in that the swirling reactor tank comprises an inner wall (18) and an outer wall (20), the inner and outer walls forming an interspace (22) and the gas injection nozzle being secured to the outer wall (20) and flush with the inner wall (18) of the side wall part (14), while the gas injection nozzles (60) close off the drilled opening (42) in sealing manner.

2. Gas injection nozzle according to claim 1, characterised in that into each drilled opening (42) is fitted a nozzle insert (44) with through-passing hole (46) and a tapered support surface (48) and in that a nozzle assembly (60) with a nozzle tip taper (50) with bevelled surface (52) is fitted and adapted into the through-passing hole (46) of the nozzle insert and in that the nozzle tip taper (50) seals with the tapered support surface (48) of the nozzle insert (44).

3. Gas injection nozzle according to claims 1 and 2, characterised in that the nozzle tip taper (50) is produced from ceramic fibres of alumina and silica.

4. Gas injection nozzle according to claims 1 to 3, characterised in that it contains a nozzle assembly comprising a nozzle moulding (62) with a through-flow passage (66) and a mouth opening (68) at its end and a nozzle nut (72) fitted on the rear face of the nozzle moulding (62), a screw component (74) with an undercut part (76) which receives a seal (78) which is so designed that it fits gas-tightly on the rear surface (70) of the nozzle moulding (62) and the screw component (74) is provided with a through-passing connection (80) which receives a gas supply conduit (82) which is connected with the screw component (74) by a welded connection.

5. Gas injection nozzle according to claims 1 to 4, characterised in that the entire nozzle is inserted into the through-passing opening (54) of the nozzle tip taper (50) and in that the bevelled surface (58) of the nozzle tip taper (50) closes in sealing manner with the aid of an inner ring (86) and a nozzle compression spring (88).

6. Gas injection nozzle according to claims 1 to 5, characterised in that an inner ring (86) is provided with a through-passing opening (90) having an undercut part (92) in order to receive one side of the nozzle compression spring (88), the other side of which is so arranged that it rests on the rear wall (93) of the screw part (74) and the inner ring (86) is equipped with a number of arms (94) secured to it which are designed so that they are received in protected manner on grooves (96) which are situated in a cylindrical part (36) of the outer ring part (30).

7. Gas injection nozzle according to claims 1 to 6, characterised in that the arms (94) of the inner ring (86) are received in the grooves (96) of the outer ring part (30) and the nozzle spring (88), which rests on the undercut surface (92) of the hole (90) in the inner ring (86), presses against the rear wall (93) of the screw component (74), so that the nozzle, especially the bevelled surface (64) of the nozzle moulding (62), and the sealing surface of the nozzle tip taper (50) are directed in sealing manner towards one another.

8. Gas injection nozzle according to claims 1 to 7, characterised in that the pressure force exerted by the spring (88) upon the nozzle assembly (60) is adapted by variation of position of the outer ring part (30) against the flanges (24), in that the outer ring part (30) is brought into different positions on the threaded journal (26) with the aid of nuts (38) and spring rings (40).

9. Utilisation of the gas injection nozzle according to patent claim 1 in swirling reactor tanks for the degassing of metal melts by means of a fluxing gas.

**Revendications**

1. Buse d'injection de gaz (60) pour une cuve de réacteur à écoulement turbulent, pour le dégazage de bains de métal en fusion au moyen d'un gaz d'addition, étant précisé que la cuve de réacteur à écoulement turbulent est constituée d'une paroi latérale de forme allongée cylindrique (12) suivie d'une autre paroi latérale (14), qui va en se rétrécissant vers le bas et qui est située en dessous de la paroi latérale cylindrique, ces parois ayant un axe central commun; d'une ouverture d'entrée du métal pour l'arrivée du métal fondu; d'une ouverture de sortie de métal, située en dessous de l'arrivée, pour le départ du métal en fusion traité; et d'au moins deux dispositifs d'amenée de gaz situés à différents niveaux de la paroi latérale qui va en se rétrécissant vers le bas; l'ouverture d'entrée du métal se trouve au-dessus, et l'ouverture de sortie du métal, au-dessous, des dispositifs d'amenée de gaz; et étant précisé que les dispositifs d'amenée du gaz sont conçus comme alésages avec des buses d'injection de gaz qui y sont introduits, caractérisée en ce que la cuve de réacteur à écoulement turbulent est constituée d'une paroi interne (18) et d'une paroi externe (20), étant précisé que la paroi interne et la paroi externe forment un espace intermédiaire (22) et que la buse d'injection de gaz est fixée à la paroi externe (20) et qu'elle vient au ras de la paroi interne (18) de la paroi latérale (14) et que les buses d'injection du gaz (60) viennent se raccorder de façon étanche à l'alésage (42).

2. Buse d'injection de gaz selon la revendication 1, caractérisée en ce que dans chaque alésage (42) est montée une garniture de buse (44) présentant un trou traversant (46) et une surface d'appui conique (48); et en ce que dans le trou traversant (46) de la garniture de buse est montée et ajustée une buse équipée (60) présentant un cône de pointe de buse (50) à surface chanfreinée (52); et en ce que le cône de pointe de buse (50) est étanche avec la surface d'appui conique (48) de la garniture de buse (44).

3. Buse d'injection de gaz selon la revendication 1 et la revendication 2, caractérisée en ce que le cône de pointe de buse (50) est fabriqué en fibres céramiques d'alumine et de silice.

4. Buse d'injection de gaz selon les revendications 1 à 3, caractérisée en ce qu'elle contient une buse équipée constituée d'une pièce de forme (62) présentant un canal de passage (66) et une embouchure (68) à son extrémité et un écrou (72) monté sur la face arrière de la pièce de forme (62); d'une pièce filetée (74) présentant une partie lamée (76) qui reçoit une garniture d'étanchéité (78) calculée pour s'adapter, avec l'étanchéité au gaz, contre la surface (70) de la pièce de forme (62); la pièce filetée (74) présentant une liaison traversante (80) qui reçoit une conduite d'alimentation en gaz (82) fixée à la pièce de forme (74) par une liaison par soudure.

5. Buse d'injection de gaz selon les revendications 1 à 4, caractérisée en ce que la buse équipée est insérée dans l'ouverture traversante (54) du cône de pointe de buse (50); et en ce que la surface chanfreinée (58) du cône de pointe de buse (50) vient se raccorder de façon étanche à l'aide d'une bague interne (86) et d'un ressort de compression (88).

6. Buse d'injection de gaz selon les revendications 1 à 5, caractérisée en ce qu'une bague interne (86) comporte une ouverture traversante (90) qui présente une partie lamée (90), pour recevoir une extrémité du ressort de compression (88) dont l'autre extrémité est disposée de façon à s'appuyer contre la paroi arrière (93) de la pièce filetée (74); et en ce que la bague interne (86) est munie d'un certain nombre de bras (94) qui lui sont fixés et dont la forme est telle qu'ils sont repris, protégés, dans des encoches (96) qui se trouvent dans la partie cylindrique (36) de la pièce annulaire externe (30).

7. Buse d'injection de gaz selon les revendications 1 à 6, caractérisée en ce que les bras (94) de la bague interne (86) sont repris dans les encoches (96) de la pièce annulaire externe (30); et en ce que le ressort (88), qui s'appuie contre la surface lamée (92) du trou (90) de la bague interne (86), pousse contre la paroi arrière (93) de la pièce filetée (74) de sorte que la buse, en particulier la surface chanfreinée (64) de la pièce de forme (62) s'aligne de façon étanche avec la surface étanche du cône de pointe de buse (50).

8. Buse d'injection de gaz selon les revendications 1 à 7, caractérisée en ce que, par modifications de la position de la pièce annulaire externe (30) en direction du flasque (24), on peut ajuster la force exercée par le ressort (88) sur la buse équipée (60), étant précisé que la pièce annulaire externe (30) est rapportée en différentes positions sur les goujons (26) à l'aide des écrous (38) et des rondelles grower (40).

9. Emploi de la buse d'injection de gaz selon la revendication 1 dans une cuve de réacteur à écoulement turbulent pour le dégazage des bains de métal en fusion à l'aide d'un gaz d'addition.

FIG-1

FIG-3

FIG-2

FIG-4